**Europäisches Patentamt**

**European Patent Office**

**Office européen des brevets**

(11) Veröffentlichungsnummer: **0 226 854 B1**

(12) **EUROPÄISCHE PATENTSCHRIFT**

(45) Veröffentlichungstag der Patentschrift: 21.03.90

(21) Anmeldenummer: 86116373.1

(22) Anmeldetag: 25.11.86

(51) Int. Cl.⁴: **B27B 9/00**

(54) **Gleitschuh für Handkreissägen.**

(30) Priorität: 07.12.85 DE 8534471 U

(43) Veröffentlichungstag der Anmeldung: 01.07.87 Patentblatt 87/27

(45) Bekanntmachung des Hinweises auf die Patenterteilung: 21.03.90 Patentblatt 90/12

(84) Benannte Vertragsstaaten: AT BE CH DE FR GB IT LI NL SE

(56) Entgegenhaltungen: EP-A- 0 144 707 US-A- 4 539 881

(73) Patentinhaber: Karl M. Reich, Maschinenfabrik GmbH, Kisslingstrasse 1 Postfach 1740, D-7440 Nürtingen(DE)

(72) Erfinder: Kuhn, Rainer, Rubensweg 6, D-7440 Nürtingen(DE)
Erfinder: Schwarz, Heinz, Panoramastrasse 6/2, D-7440 Nürtingen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Elektrowerkzeug mit einem Gleitschuh gemäß Oberbegriff von Anspruch 1.

Zum Ausführen von geraden Sägeschnitten mit Handkreissägen ist es aus dem deutschen Gebrauchsmuster Nr. 7 304 006 bekannt, auf das Werkstück eine mit einer Rippe versehene Führungsschiene aufzulegen und die Grundplatte der Handkreissäge mit einem Gleitschuh zu verbinden, der eine zu der Rippe der Führungsschiene passende Nut aufweist, so daß Rippe und Nut als Führungssystem für die Handkreissäge dienen.

Dieser bekannte Gleitschuh besteht aus Metall und ist mit Auflageleisten aus Kunststoff versehen, die auf der Führungsschiene aufliegen und ein leichteres Gleiten ermöglichen.

Es ergibt sich somit eine verhältnismäßig teure Herstellung des Gleitschuhs, seine verhältnismäßig große Bauhöhe geht an der Schnittiefe des Sägeblattes verloren und die Führung der Handkreissäge ist unsicher, da sich der Gleitschuh nur über einen Teil der Grundplatte erstreckt.

Aus der EP-A 0 144 707 ist weiterhin eine Handkreissäge gemäß Oberbegriff von Anspruch 1 bekannt, deren Grundplatte aus Metall eine Führungsrinne aufweist, in die eine Führungsrippe einer Führungsschiene eingreift. Bei Verwendung dieser Handkreissäge ohne Führungsschiene können Werkstücke mit empfindlichen Oberflächen beschädigt werden.

Außerdem ist es notwendig, die Führungsschiene zur Verbesserung der Gleiteigenschaften mit zusätzlichen Kunststoffauflagen zu versehen.

Augabe der vorliegenden Erfindung ist daher die Schaffung eines Gleitschuhs der eingangs genannten Art, der billig herstellbar ist und eine sichere Auflage der Handkreissäge auf dem Werkstück gewährleistet.

Diese Aufgabe wird erfindungsgemäß durch das im kennzeichnenden Teil des Anspruchs 1 angegebene Merkmal gelöst.

Das einstückige Kunststoffteil kann mit verhältnismäßig dünner Wandstärke hergestellt werden und erlaubt daher eine möglichst große Schnittiefe des Sägeblatts. Da sich der Gleitschuh über die ganze Grundplatte erstreckt, ergibt sich eine besonders sichere Auflage der Maschine. Weiterhin schützt der Kunststoff empfindliche Oberflächen des Werkstücks vor Beschädigungen durch die Grundplatte. Dies macht sich besonders bei sogenannten Schattenfugensägen zum Geradesägen von Holzdecken vorteilhaft bemerkbar.

Weist der Gleitschuh gemäß Unteransprüchen eine zur Sägerichtung parallele Führungsrinne auf, die in eine entsprechende Rippe einer Führungsschiene eingreift, so kann die mit dem Gleitschuh versehene Handkreissäge auch zum Ausführen von geraden Sägeschnitten verwendet werden.

Die erfindungsgemäße Handkreissäge mit Gleitschuh eignet sich also vorteilhafterweise besonders als Schattenfugensäge, wie auch in Verbindung mit einer Führungsschiene zum Ausführen von geraden Sägeschnitten.

Der erfindungsgemäße Gleitschuh läßt sich natürlich auch in Verbindung mit Stichsägen, Oberfräsen und anderen Elektrowerkzeugen vorteilhaft verwenden.

Im folgenden ist ein Ausführungsbeispiel der Erfindung unter Bezugnahme auf die Zeichnungen näher beschrieben.

Es zeigen:

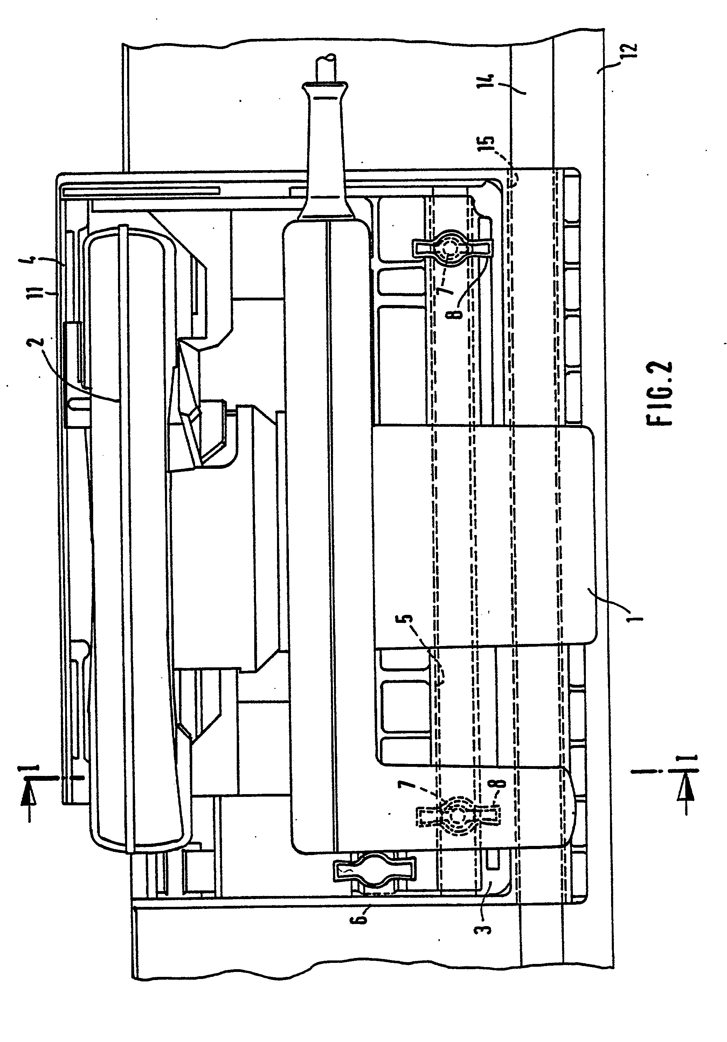

Fig. 1 Handkreissäge mit Gleitschuh, Teilschnitt nach Linie I–I in Fig. 2
Fig. 2 Draufsicht auf die Handkreissäge gemäß Fig. 1

Die Handkreissäge 1 mit dem Sägeblatt 2 ist in bekannter Weise auf einer Grundplatte 3 einstellbar gelagert. Diese Grundplatte 3 ist über ihren ganzen Umfang mit einem abgewinkelten, hochstehenden Rand 4 versehen und weist eine zum Sägeblatt 2 parallel verlaufende, nach unten offene Aufnahmenut 5 auf.

Mit dieser Grundplatte 3 ist ein Gleitschuh 6 aus dünnwandigem Kunststoff verbindbar, der sich über die gesamte Fläche der Grundplatte erstreckt. Er ist dazu mit Augen 7 versehen, die in die Aufnahmenut 5 der Grundplatte 3 eingreifen. Zum Festhalten des Gleitschuhs 6 dienen Flügelschrauben 8, die in Bohrungen 9 der Grundplatte 3 angeordnet und in Gewinde 10 von Gleitschuh 6 einschraubbar sind. Der Gleitschuh 6 ist über den größten Teil seines Umfangs ebenfalls nach oben abgewinkelt und weist einen Rand 11 auf, der den Rand 4 der Grundplatte 3 umgreift.

Zum Ausführen von geraden Sägeschnitten wird diese Handkreissäge 1 mit Gleitschuh 6 in Verbindung mit einer Führungsschiene 12 verwendet, die auf ein Werkstück 13 auflegbar ist und in bekannter Weise eine Führungsrippe 14 aufweist.

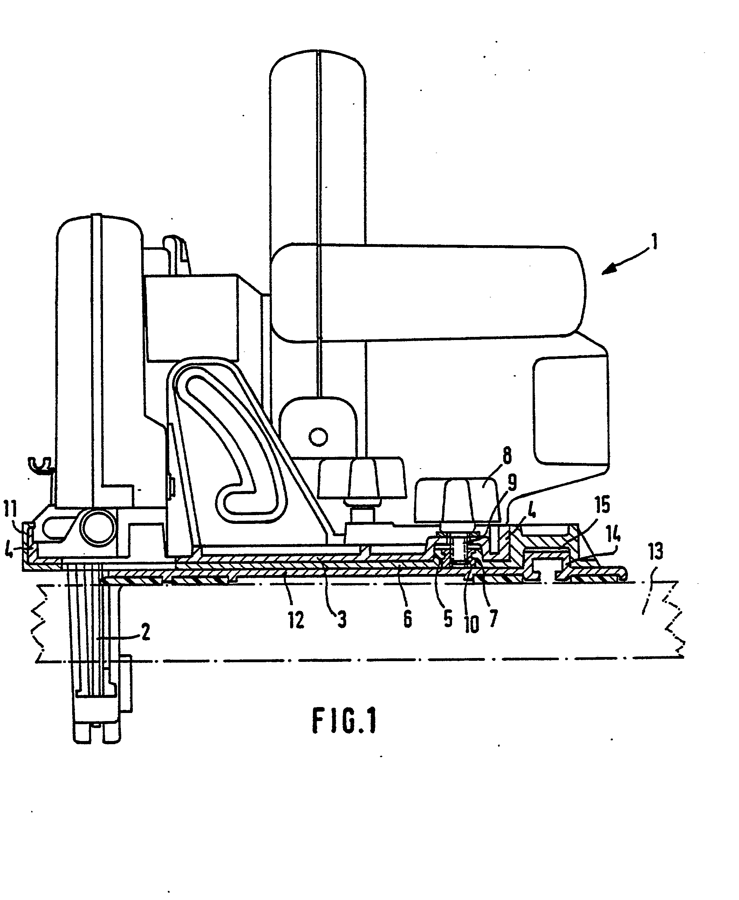

An seiner dem Sägeblatt 2 entgegengesetzten Seite weist der Gleitschuh 6 eine zum Sägeblatt 2 parallele Führungsrinne 15 auf, in die die Führungsrippe 14 mit einem gewissen Spiel paßt und die zum Führen der Handkreissäge beim Sägen dient. Wie Fig. 1 zeigt, ist die Führungsrinne 15 außerhalb der Grundplatte 3 angeordnet.

## Patentansprüche

1. Elektrowerkzeug, insbesondere Handkreissäge, versehen mit einem Gleitschuh (6), der an der Unterseite der Grundplatte (3) der Handkreissäge befestigt ist, dadurch gekennzeichnet, daß der Gleitschuh (6) über eine lösbare Verbindung (8–10) austauschbar an der Grundplatte (3) befestigt und einschließlich Aufsetzfläche als einstückiges Kunststoffteil ausgebildet ist, das sich über die ganze Unterseite der Grundplatte (3) erstreckt.

2. Elektrowerkzeug nach Anspruch 1, dadurch gekennzeichnet, daß der Gleitschuh (6) eine zur Sägerichtung parallele Führungsrinne (15) aufweist, in die nach dem Aufsetzen der Handkreissäge (1) auf eine auf dem Werkstück (13) auflegbare Führungsschiene (12) eine Führungsrippe (14) der Führungsschiene (12) zum Führen und Verschieben der Handkreissäge (1) eingreift.

3. Elektrowerkzeug nach Anspruch 2, dadurch gekennzeichnet, daß die Grundplatte (3) mit einer parallel zur Sägerichtung verlaufenden Aufnahmenut (5) versehen ist, in die Augen (7) des Gleitschuhs (6) mindestens teilweise eingreifen.

4. Elektrowerkzeug nach einem der Ansprüche 2 oder 3, dadurch gekennzeichnet, daß der Gleitschuh (6) an seiner der Führungsrinne (15) gegenüberliegenden Seite einen abgewinkelten Rand (11) aufweist, der einen abgewinkelten Rand (4) der Grundplatte (3) umgreift.

**Revendications**

1. Outil électrique, essentiellement scie circulaire à main, muni d'un patin de guidage (6) fixé sur la face inférieure de la plaque de base (3) de la scie circulaire, caractérisé en ce que le patin de guidage (6) est fixé, par l'intermédiaire d'un raccord amovible (8–10) et de façon à pouvoir être échangé, sur la plaque de base (3) et que, y compris la surface d'assise, il est conçu comme pièce monobloc en matière synthétique s'étendant par-dessus toute la face inférieure de la plaque de base (3).

2. Outil électrique selon la revendication 1, caractérisé en ce que le patin de guidage (6) présente une gorge de guidage (15) parallèle à la direction de sciage dans laquelle engrène, après la pose de la scie circulaire (1) sur un rail de guidage (12) pouvant être placé sur la pièce (13), une nervure de guidage (14) du rail de guidage (12) pour guider et déplacer la scie circulaire (1).

3. Outil électrique selon la revendication 1, caractérisé en ce que la plaque de base (3) contient une rainure de positionnement (5) parallèle à la direction de sciage dans laquelle engrènent, au moins partiellement, des tenons (7) du patin de guidage (6).

4. Outil électrique selon l'une des revendications 2 ou 3, caractérisé en ce que le patin de guidage (6) est muni sur sa face opposée à la gorge de guidage (15) d'un bord coudé (11) enveloppant un bord coudé (4) de la plaque de base (3).

**Claims**

1. An electric tool, in particular a portable circular saw, provided with a sliding shoe (6) fastened to the underside of the sole plate (3) of said saw, characterized in that said sliding shoe (6) is attached replaceably via a releasable connection (8–10) to said sole plate (3) and is designed as a one-piece plastic section including the face and extending over the entire underside of said sole plate (3).

2. An electric tool, according to claim 1, characterized in that the sliding shoe (6) has parallel to the sawing direction a guide channel (15) into which a guide rib (14) of a guide rail (12) engages after positioning of the portable circular saw (1) on said guide rail (12) placeable onto the workpiece, in order to guide and move said portable circular saw (1).

3. An electrical tool, according to claim 2, characterized in that the sole plate (3) is provided with a locating groove (5) running parallel to the sawing direction, into which groove eyes (7) of the sliding shoe (6) at least partially engage.

4. An electric tool, according to one of claims 2 or 3, characterized in that the sliding shoe (6) has on the side opposite the guide channel (15) an angled rim (11) that engages in an angled rim (4) of the sole plate (3).

FIG.1

FIG.2